# EUROPEAN PATENT APPLICATION

(11) **EP 4 568 324 A1**
(43) Date of publication of application: **11.06.2025**
(21) Application number: 23849150.0
(22) Date of filing: 03.07.2023
(51) Int. Cl.: H04W 24/04

(54) **DATA SENDING METHOD, DEVICE, AND SYSTEM, STORAGE MEDIUM, AND ELECTRONIC DEVICE**

(30) Priority: 01.08.2022 CN 202210920313
(71) Applicant: ZTE CORPORATION, Shenzhen, Guangdong 518057 (CN)
(72) Inventor: LI, Ling, Shenzhen, Guangdong 518057 (CN); XU, Jing, Shenzhen, Guangdong 518057 (CN); WANG, Bo, Shenzhen, Guangdong 518057 (CN); LV, Xingzai, Shenzhen, Guangdong 518057 (CN)
(74) Representative: Perronace, Andrea
(86) International application number: PCT/CN2023/105590
(87) International publication number: WO 2024/027440

(57) **Abstract**

Embodiments of the present disclosure provide a data sending method, apparatus, and system, and a storage medium and an electronic apparatus. The data sending method includes: receiving a data initial request sent by a digital twin network according to a current service requirement, where the data initial request includes at least one of the following: a data type of data required by the digital twin network, a reporting mode of the required data, or a compression mode of the required data; determining whether a physical network supports content indicated by the data initial request; and when the physical network supports the content indicated by the data initial request, sending a request success message to the digital twin network, and sending the required data to the digital twin network according to the content indicated by the data initial request.

## Description

The present disclosure claims priority to Chinese Patent Application No. 202210920313.3 filed to the China National Intellectual Property Administration on August 1, 2022 and entitled "Data Sending Method, Device, and System, Storage Medium and Electronic Device", the disclosure of which is hereby incorporated by reference in its entirety.

### Technical Field

Embodiments of the present disclosure relate to the field of communications, and specifically to a data sending method, apparatus, and system, and a storage medium and an electronic apparatus.

### Background

The use of a digital twin technology is becoming increasingly common across industries. In the field of communications, digital twin is an important component of the 6G technology. A digital twin network greatly improve the networking, operation and maintenance, and optimization efficiency of a communication network by virtually mapping a real physical network, and thus is an important support for future network autonomy. Massive real-time data interactions between a physical entity network and the digital twin network need to be performed through a data interface, such that standardization of the data interface is essential to improve the efficiency and effectiveness of massive data interactions. However, there are no technical solutions for standardized research on the data interface in the industry today.

Effective solutions have not yet been provided for the problems such as the lack of data interaction modes between the physical entity network and the digital twin network in the related art.

### Summary

Embodiments of the present disclosure provide a data sending method, apparatus, and system, and a storage medium and an electronic apparatus, to at least solve the problem of the lack of data interaction modes between a physical entity network and a digital twin network in the related art.

An embodiment of the present disclosure provides a data sending method, including: receiving a data initial request sent by a digital twin network according to a current service requirement, where the data initial request includes at least one of the following: a data type of data required by the digital twin network, a reporting mode of the required data, or a compression mode of the required data; determining whether a physical network supports content indicated by the data initial request; and when the physical network supports the content indicated by the data initial request, sending a request success message to the digital twin network, and sending the required data to the digital twin network according to the content indicated by the data initial request.

Another embodiment of the present disclosure provides a data sending apparatus, including: a receiving module, configured to receive a data initial request sent by a digital twin network according to a current service requirement, where the data initial request includes at least one of the following: a data type of data required by the digital twin network, a reporting mode of the required data, or a compression mode of the required data; a determination module, configured to determine whether a physical network supports content indicated by the data initial request; and a sending module, configured to, when the physical network supports the content indicated by the data initial request, send a request success message to the digital twin network, and send the required data to the digital twin network according to the content indicated by the data initial request.

Still another embodiment of the present disclosure provides a data sending system, including: a data processing module, located in a digital twin network, and configured to send a data initial request according to a current service requirement to a data collection module located in a physical network, where the data initial request includes at least one of the following: a data type of data required by the digital twin network, a reporting mode of the required data, or a compression mode of the required data; and the data collection module is further configured to determine whether the physical network supports content indicated by the data initial request; and when the physical network supports the content indicated by the data initial request, send a request success message to the digital twin network, and send the required data to the digital twin network according to the content indicated by the data initial request.

Still another embodiment of the present disclosure further provides a computer-readable storage medium. The computer-readable storage medium stores a computer program. Steps in any one of the above method embodiments are executed when the computer program is configured to operate.

Still another embodiment of the present disclosure further provides an electronic apparatus. The electronic apparatus includes a memory and a processor. The memory stores a computer program. The processor is configured to operate the computer program to execute steps in any one of the above method embodiments.

Through the present disclosure, the data initial request sent by the digital twin network according to the current service requirement is received, where the data initial request includes at least one of the following: the data type of the data required by the digital twin network, the reporting mode of the required data, or the compression mode of the required data; whether the physical network supports the content indicated by the data initial request is determined; and when the physical network supports the content indicated by the data initial request, the request success message is sent to the digital twin network, and the required data is sent to the digital twin network according to the content indicated by the data initial request. By using the above solution, the problem of the lack of data interaction modes between a physical entity network and a digital twin network in the related art is solved, and a technical effect of providing a data interaction mode between the physical entity network and the digital twin network is achieved.

### Brief Description of the Drawings

Fig. 1 is a block diagram of a hardware structure of a computer terminal of a data sending method according to embodiments of the present disclosure.
Fig. 2 is a flowchart of a data sending method according to embodiments of the present disclosure.
Fig. 3 is a schematic composition diagram of an optional data interaction interface according to embodiments of the present disclosure.
Fig. 4 is a flowchart timing diagram (I) of an optional data sending method according to embodiments of the present disclosure.
Fig. 5 is a flowchart timing diagram (II) of an optional data sending method according to embodiments of the present disclosure.
Fig. 6 is a flowchart timing diagram (III) of an optional data sending method according to embodiments of the present disclosure.
Fig. 7 is a schematic classification diagram of an optional data type according to embodiments of the present disclosure.
Fig. 8 is a structural block diagram of an optional data sending apparatus according to embodiments of the present disclosure.
Fig. 9 is a structural block diagram of an optional data sending system according to embodiments of the present disclosure.

### Detailed Description of the Embodiments

In order to enable those skilled in the art to better understand the solutions of the present disclosure, the technical solutions in the embodiments of the present disclosure will be clearly and completely described below in combination with the drawings in the embodiments of the present disclosure. It is apparent that the described embodiments are only part of the embodiments of the present disclosure, not all the embodiments. All other embodiments obtained by those of ordinary skill in the art on the basis of the embodiments in the present disclosure without creative work shall fall within the scope of protection of the present disclosure.

It is to be noted that terms "first", "second" and the like in the description, claims and the above mentioned drawings of the present disclosure are used for distinguishing similar objects rather than describing a specified sequence or a precedence order. It should be understood that the data used in such a way may be exchanged where appropriate, in order that the examples of the present disclosure described here can be implemented in an order other than those illustrated or described herein. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

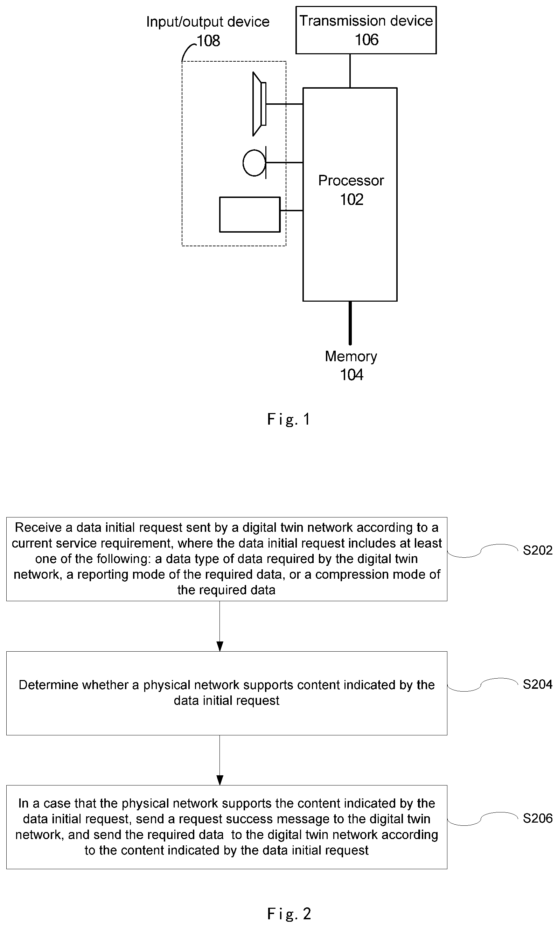

The method embodiments provided in the embodiments of the present disclosure may be executed in a computer terminal or a similar computing apparatus. For example, the method embodiments are operated on the computer terminal, Fig. 1 is a block diagram of a hardware structure of a computer terminal of a data sending method according to embodiments of the present disclosure. As shown in Fig. 1, the computer terminal may include one or more (only one is shown in Fig. 1) processors 102 (the processor 102 may include, but is not limited to, a processing apparatus such as a microprocessor MCU or a programmable logic device FPGA) and a memory 104 for storing data. The above computer terminal may further include a transmission device 106 for achieving a communication function and an input/output device 108. Those skilled in the art may understand that the structure shown in Fig. 1 is only a schematic diagram, which does not limit the structure of the above computer terminal. For example, the computer terminal may further include more or less components than those shown in Fig. 1, or have a different configuration from that shown in Fig. 1.

The memory 104 may be configured to store a computer program, for example, a software program and a module of application software, such as a computer program corresponding to a data sending method in the embodiments of the present disclosure. The processor 102 runs the computer program stored in the memory 104, so as to execute various functional applications and data processing, that is, to realize the above method. The memory 104 may include a high-speed random access memory, and may further include a non-volatile memory, such as one or more magnetic disk memory apparatuses, a flash memory device, or other non-volatile solid-state memory devices. In some examples, the memory 104 may further include memories remotely disposed relative to the processor 102. The remote memories may be connected to the computer terminal by using a network. Examples of the above network include, but are not limited to, the Internet, an intranet, a local area network, a mobile communication network, and a combination thereof.

The transmission device 106 is configured to receive or transmit data via a network. The specific example of the above network may include a wireless network provided by a communication provider of the computer terminal. In an example, the transmission device 106 includes a Network Interface Controller (NIC), and may be connected to other network devices by using a base station, so as to communicate with the Internet. In an example, the transmission device 106 is a Radio Frequency (RF) module, which is configured to communicate with the Internet in a wireless manner.

This embodiment provides a data sending method operating on the computer terminal. Fig. 2 is a flowchart of a data sending method according to embodiments of the present disclosure. As shown in Fig. 2, the flow includes the following steps.

At S202, a data initial request sent by a digital twin network is received according to a current service requirement, where the data initial request includes at least one of the following: a data type of data required by the digital twin network, a reporting mode of the required data, or a compression mode of the required data.

It is to be noted that, the reporting mode of the required data may be classified into periodic reporting or condition triggered reporting. When the reporting mode is the periodic reporting, a reporting period is carried; and when the reporting mode is the condition triggered reporting, a trigger condition is carried, the trigger condition may be "the amount of data collected being greater than a threshold value", "a value of the collected data being greater than or less than a threshold value", etc., the above trigger conditions are examples only, and the present disclosure is not limited thereto.

It is to be noted that, the compression mode of the required data is used to indicate that request data is compressed or uncompressed by using existing data compression protocols.

At S204, whether a physical network supports content indicated by the data initial request is determined.

At S206, when the physical network supports the content indicated by the data initial request, a request success message is sent to the digital twin network, and the required data is sent to the digital twin network according to the content indicated by the data initial request.

Through the above steps, the data initial request sent by the digital twin network according to the current service requirement is received, where the data initial request includes at least one of the following: the data type of the data required by the digital twin network, the reporting mode of the required data, or the compression mode of the required data; whether the physical network supports the content indicated by the data initial request is determined; and when the physical network supports the content indicated by the data initial request, the request success message is sent to the digital twin network, and the required data is sent to the digital twin network according to the content indicated by the data initial request. By using the above solution, the problem of the lack of data interaction modes between a physical entity network and a digital twin network in the related art is solved, and a technical effect of providing a data interaction mode between the physical entity network and the digital twin network is achieved.

Optionally, S202 of receiving the data initial request sent by the digital twin network according to the current service requirement may be implemented by the following solutions: a configuration request sent by the digital twin network is received, where the configuration request includes at least one of the following: a data type of data to be collected, or a collection mode of the data to be collected; the data to be collected is collected based on the configuration request; and a response success message is sent to the digital twin network when the data to be collected is successfully collected, so as to receive the data initial request sent by the digital twin network.

After the digital twin network is started, a configuration request message is sent to the physical network, and the configuration request message includes data types of all data required to be collected, data collection modes, etc., so as to perform initial configuration on the physical network. After receiving the configuration request sent by the digital twin network, the physical network performs data collection on the data to be collected based on the configuration request, and when the data to be collected is successfully collected, the physical network sends the response success message to the digital twin network to receive the data initial request sent by the digital twin network.

Based on the above collection step of collecting the data to be collected based on the configuration request, the method further includes: a response failure message is sent to the digital twin network when the data to be collected fails to be collected. The response failure message carries a reason why the data to be collected fails to be collected.

If the physical network fails to collect the data to be collected, the physical network sends the response failure message to the digital twin network, and the response failure message carries the reason why the data to be collected fails to be collected, so as to inform the digital twin network of failed data collection and the reason for failed data collection.

Optionally, after executing S204 of determining whether the physical network supports the content indicated by the data initial request, the method further includes: when the physical network does not support the content indicated by the data initial request, a request failure message is sent to the digital twin network.

It may be understood that, after receiving the data initial request sent by the digital twin network, the physical network checks whether the data type requested as indicated by the data initial request supports reporting, for example, whether to support processing modes such as compression; and if the data requested as indicated by the data initial request is not ready, the request failure message carrying the request failure reason is sent to the digital twin network, so as to inform the digital twin network of request failure and the reason for request failure.

Optionally, a data change request message sent by the digital twin network is received when the digital twin network receives the request failure message or the digital twin network changes the content indicated by the data initial request. The data change request message carries data content to be changed, and the data content to be changed includes at least one of the following: the data type of the required data or the reporting mode of the required data.

If the digital twin network receives the request failure message or the digital twin network changes the data type indicated by the data initial request, the digital twin network sends the data change request message carrying the data content to be changed to the physical network, so as to modify information such as the data type of the required data in carried control information, the reporting mode of the required data, etc.

Based on the receiving step of receiving the data change request message sent by the digital twin network, the method further includes: whether the physical network supports the data content to be changed is determined; when the physical network supports the data content to be changed, a data change success response is sent to the digital twin network, and the required data is sent to the digital twin network based on the data content to be changed; and when the physical network does not support the data content to be changed, a data change failure response is sent to the digital twin network.

After the physical network receives the data change request message sent by the digital twin network, whether the physical network supports data such as the data type of the required data requested to be changed, the reporting mode of the required data, etc. is checked; if so, the data change success response is sent to the digital twin network, and the required data is sent to the digital twin network based on the data such as the data content to be changed, including the data type, reporting mode, compression mode, or the like; and if no, the data change failure response is sent to the digital twin network, so as to inform the digital twin network of change failure.

Optionally, after executing the receiving step of receiving the configuration request sent by the physical network, the method further includes: a re-configuration request message sent by the digital twin network is received when the digital twin network is about to change content included in the configuration request; a re-configuration request success response is sent to the digital twin network when the physical network supports the content included in the changed configuration request; and a re-configuration request failure response is sent to the digital twin network when the physical network does not support the content included in the changed configuration request.

If the digital twin network is about to change configuration information such as the data type to be collected, a collection mode, etc., the re-configuration request message needs to be sent to the physical network, such that when the digital twin network is about to change content included in the configuration request, the physical network receives the re-configuration request message sent by the digital twin network; the re-configuration request success response is sent to the digital twin network if the physical network supports the content included in the changed configuration request; and the re-configuration request failure response is sent to the digital twin network if the physical network does not support the content included in the changed configuration request.

It is to be noted that, the collection mode is used to indicate the mode in which the physical network collects data. Periodic collection or condition triggered collection may be included; when the periodic collection is indicated, a collection period is carried; when the condition triggered collection is indicated, a trigger condition is carried, for example, "a cell access terminal is greater than a threshold value", "the quality of a terminal channel is greater than a threshold value", etc.; and the above trigger conditions are examples only, which may further include others, and the present disclosure is not limited thereto.

Optionally, the method further includes: a data termination request message sent by the digital twin network is received, where the data termination request message carries the data type; and in response to the data termination request message, data of the data type stops to be sent to the digital twin network.

If the digital twin network does not require a certain type of data to be reported, the data termination request message carrying the data type is sent to the physical network, so as to instruct the physical network to stop reporting the type of data; and after receiving the data termination request message carrying the data type sent by the digital twin network, the physical network stops, in response to the data termination request message, sending data of the data type to the digital twin network.

Optionally, the method further includes: a configuration termination request message sent by the digital twin network is received; and in response to the configuration termination request message, the physical network is instructed to stop at least one of the following flows: data collection, data integration, or data sending.

If the digital twin network is about to terminate a twin service and does not require the physical network to continuously collect data, the configuration termination request message is sent to the physical network, so as to instruct the physical network to stop data collection, integration, and reporting operations; and after the physical network receives the configuration termination request message sent by the digital twin network, in response to the configuration termination request message, the physical network is instructed to stop at least one of the following flows: data collection, data integration, or data sending.

Optionally, the data initial request further includes a data type of data to be collected or a collection mode of the data to be collected. The method further includes: the data to be collected is collected based on the data initial request; and a response success message is sent to the digital twin network when the data to be collected is successfully collected, so as to receive the data initial request sent by the digital twin network.

A system may not need an initial configuration process and a re-configuration process, that is, the digital twin network directly sends the data initial request additionally carrying the data type of the data to be collected and the collection mode of the data to be collected without sending the configuration request, collects the data to be collected based on the data initial request, and sends the response success message to the digital twin network when the data to be collected is successfully collected, so as to receive the data initial request sent by the digital twin network. It may be understood that, when the configuration request sent by the digital twin network is not received, the data to be collected may be collected based on the data initial request including at least one of the following: the data type of the data required by the digital twin network, the reporting mode of the required data, the compression mode of the required data, the data type of the data to be collected, or the collection mode of the data to be collected; and when the data to be collected is successfully collected, the response success message is sent to the digital twin network to receive the data initial request sent by the digital twin network.

An embodiment of the present disclosure further provides a data interface solution between the physical network and the digital twin network, so as to determine content such as an interaction data type, interaction control mode, interaction flow, etc. between the physical network and the digital twin network.

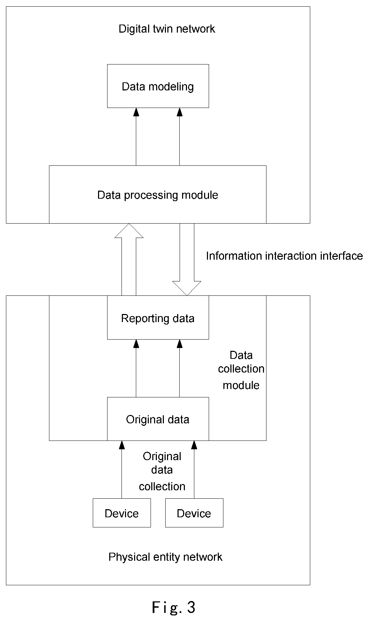

In this embodiment of the present disclosure, a data interaction interface is to achieve an interaction between the digital twin network and the physical network. Specifically, as shown in Fig. 3, the data interaction interface is composed of two modules. A physical data collection module is located on a physical entity network side, and an implementation function of the physical data collection module includes: physical data required for digital twin is collected, integrated, and sent to a twin network in a particular manner, and a control message of a twin network side can be received and a response is made. A twin data processing module is located on the digital twin network side, can process and analyze data reported by the physical network for subsequent use of data modeling flows, and can send the control information to indicate behaviors of the physical network.

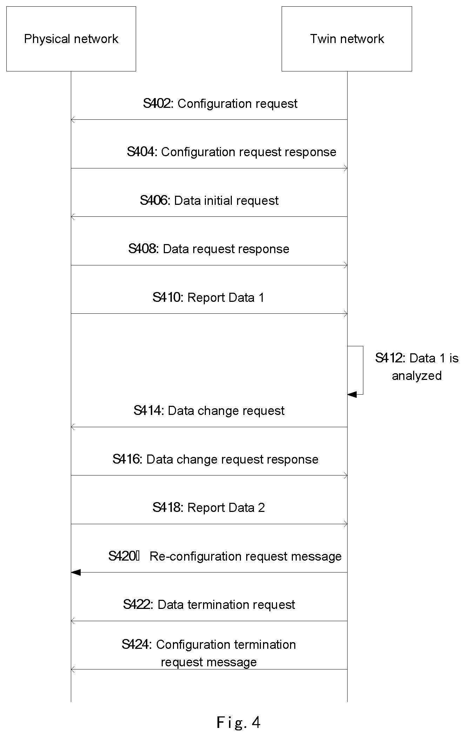

Fig. 4 is a flowchart of information interaction between a physical network and a digital twin network according to optional embodiments of the present disclosure. As shown in Fig. 4, the following steps are included.

At S402, after the digital twin network is started, the twin data processing module sends the configuration request message to the physical network to perform initial configuration on the physical network, where configuration information includes: all data types required to be collected, data collection modes, etc.

At S404, after the physical network receives the configuration request message, a data preparation stage is entered, the physical data collection module collects related data according to the configuration information and sends the response success message to the twin network; and if the collection of current physical network data is abnormal, for example, abnormal terminal behaviors (off line, poor channel quality, high block error rates, etc.), the response failure message carrying failure reasons (abnormal terminal behaviors) is sent to the twin network.

At S406, after the configuration request response success message of the physical network is received, the twin network issues the data initial request message carrying the control information during operation according to current requirements, so as to indicate required data types, reporting modes, compression modes, etc. If the requested data is terminal-level data, whether data for all terminals or some terminals is required is indicated. Modes for indicating some terminals include: coverage levels in which the terminals are located, terminal channel quality, etc. If the requested data is cell-level data, a cell identification number is carried in the control information to indicate that data at which cells are required.

At S408, after receiving the data initial request message, the physical network checks whether the requested data type supports reporting (supporting processing modes such as compression); if so, a request success response message is sent; and if the requested data is not ready, a request failure response carrying a request failure reason is sent.

At S410, after sending the request success message, the physical network starts sending data to the twin network, so as to send, in an indicated reporting mode, a data reporting message carrying data of the request type.

At S412, if receiving the request success response, the twin network starts preparing a data analysis operation. For the data reporting message received each time, data content in the message is analyzed. For compression data, the data is compressed by using a decompression mode corresponding to the compression mode, and an original data value is calculated for differential data. After the data is processed, the data is sent to related modules of the twin network for subsequent flows such as the simulation, modeling, and optimization of the twin network.

At S414, if the twin network receives a request failure response or actively changes information such as a reporting data type, a reporting mode, etc., the data change request message needs to be sent to the physical network, so as to modify information such as the data type in the carried control information, the reporting mode, etc.

At S416, if receiving the request change message, the physical network checks whether the information such as the data type requested to be changed and the reporting mode is supported, and if so, the data change request success response is sent; and if the data type requested to be changed or the reporting mode is not supported, the data change request failure response is sent.

At S418, after sending the change request success response, the physical network changes information such as the data type carried in the data reporting message, the reporting mode, or the compression mode, and S410 is returned to; after the physical network sends the change request failure response, the twin network may select to terminate the reporting of the type of data, and S422 is skipped to; and other information may also be continuously changed, and S414 is returned to.

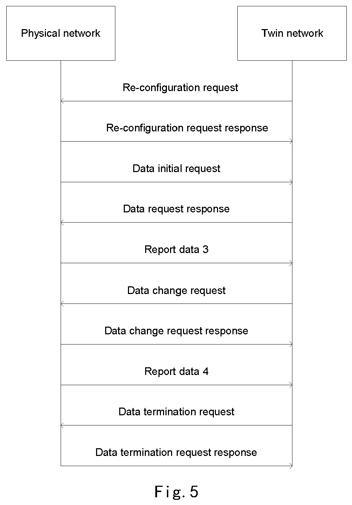

At S420, if the twin network is about to change the configuration information such as the collected data type, the collection mode, etc., the re-configuration request message needs to be sent to the physical network. Similar to S404, the physical network sends the re-configuration request success or failure response after receiving the re-configuration request message. Details may be referred to Fig. 5.

At S422, if the twin network does not require a certain type of data to be reported, the data termination request message carrying the data type is sent to the physical network, so as to instruct the physical network to stop reporting the type of data.

At S424, if the twin network is about to terminate a twin service, the physical network does not need to continuously collect data, and the configuration termination request message is sent to the physical network to instruct the physical network to stop data collection, integration, and reporting operations.

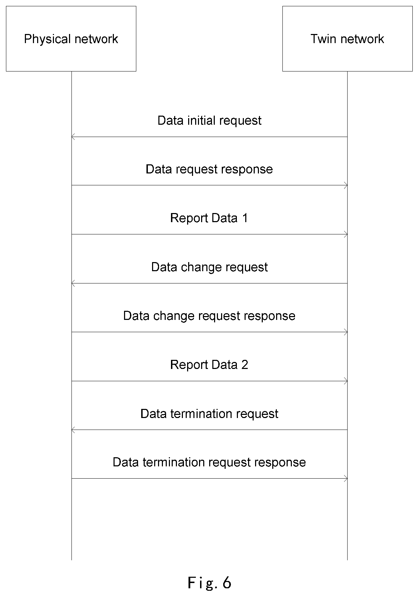

Optionally, the system may not need an initial configuration process and a re-configuration process. In the flow shown in Fig. 6, the twin network directly sends the data initial request message without sending the configuration request message, additionally carries the collected data type and collection mode in the data request message, and additionally changes the collected data type and collection mode in the data change request message, and accordingly, the physical network adds, in the response message, an indication of whether the data is supported for collection, and the rest of the process remains unchanged.

In the above embodiments, an interaction data structure between the digital twin network and the physical network may be limited through the following manners. Specifically, the data sent to the twin network by the physical network includes the following contents.

Data type: indicating a data type.

Data granularity: indicating that currently-sent data granularity is at a cell level or a terminal level, etc.

Compression mode: indicating a compression mode of data.

Value type: indicating that data is an original value or a differential value (the incremental amount of data sent in the last time relative to the previous time between two data transmissions).

Data body: values of interaction data.

Collection time: a system time recorded by a device when data is collected.

Network device ID: data source device identifiers in the physical network, for example, terminal IDs and cell IDs.

Extended data items: reserved content that can be added as needed with system update iterations.

In order to better understand the technical solution, the following solutions are further provided in the optional embodiments for explanation.

A particular base station A of a 5G network in the real world, all terminals in cells covered by the base station A, and a core network element providing services form a physical network; and in a laboratory environment, a server running a virtual base station (software), a server running a virtual terminal (software), and a server running a virtual core network (software) form a twin network.

Optional Embodiment 1: Large-scale fading twin for a wireless channel, specifically including the following steps.

At S1, a configuration request message is sent to the physical network after the twin network is started, so as to perform initial configuration on a data collection operation of the physical network.

At S2, the physical network receives configuration information, starts the data collection operation in a specific collection mode, and sends a configuration request success response to the twin network.

At S3, after receiving a configuration request success response message, the twin network issues a data initial request message, request data type: reference signal receiving power in terminal characteristic; reporting mode: periodic reporting; reporting period: 1 minute; compression mode: uncompressed; and indicates that data of all terminals and cells needs to be reported.

At S4, the physical network receives the data initial request message, and sends a data initial request success response and data: data type: the reference signal receiving power in the terminal characteristic; data granularity: terminal-level data; compression mode: uncompressed; value type: differential value; and data body: reference signal power measurement values of all terminals.

At S5, the twin network processes the reference signal power measurement values to generate large-scale channel model parameters.

At S6, the twin network issues a data termination request message to terminate the reporting of reference information receiving power data.

At S7, the twin network sends a configuration termination request message, and the physical network stops performing data collection.

Optional Embodiment 2: small-scale fading twin for a wireless channel, specifically including the following steps.

At S1, the twin network directly issues the data initial request message after being started, so as to indicate that a collected data type is a channel response matrix in the terminal characteristic, a collection mode is periodic collection, periodic configuration is 1 minute, a reporting mode is periodic reporting, and a reporting period is 1 minute.

At S2, the physical network receives the initial request message, starts data collection in a specific manner, sends the data initial request success response to the twin network, and then periodically sends a data reporting message, carrying channel response matrix data.

At S3, the twin network issues a data change request message, the request data type remaining unchanged; reporting mode: periodic reporting; reporting period: 5 minutes; compression mode: uncompressed; and indicates that data of all terminals at a coverage level 0 needs to be collected and reported.

At S4, the physical network receives the data change request message but is unable to collect terminal data at the coverage level 0, and sends a data change request failure response to the twin network.

At S5, the twin network receives the data change request failure response, and issues the data change request message to indicate terminal data at a coverage level 1 required to be collected and reported, and the rest of information remains unchanged.

At S6, the physical network receives the data change request message, successfully collects channel response matrix data of a specific terminal, sends a data change success response to the twin network, and sends data to the twin network.

At S7, related modules in the twin network process the reported channel response matrix data, and then generate a small-scale channel model.

At S8, the twin network sends a data termination request message to terminate collection and reporting of the channel response matrix data.

Through the technical solutions of the above embodiments of the present disclosure, standardized definition is performed on a data interaction flow between the physical network and the twin network, including related data type, control message and data interaction steps.

From the above descriptions about the implementation modes, those skilled in the art may clearly know that the method according to the foregoing embodiments may be implemented in a manner of combining software and a necessary universal hardware platform, and of course, may also be implemented through hardware, but the former is a preferred implementation mode under many circumstances. Based on such an understanding, the technical solutions of the present disclosure substantially or parts making contributions to the conventional art may be embodied in form of software product, and the computer software product is stored in a storage medium (for example, a ROM/RAM), a magnetic disk and an optical disk), including a plurality of instructions configured to enable a second node device (which may be a mobile phone, a computer, a server, a network device, or the like) to execute the method in each embodiment of the present disclosure.

This embodiment further provides a data sending apparatus. The apparatus is configured to implement the foregoing embodiments and the preferred implementation, and what has been described will not be described again. As used below, the term "module" may be a combination of software and/or hardware that implements a predetermined function. Although the apparatus described in the following embodiments is preferably implemented in software, but implementations in hardware, or a combination of software and hardware, are also possible and conceived.

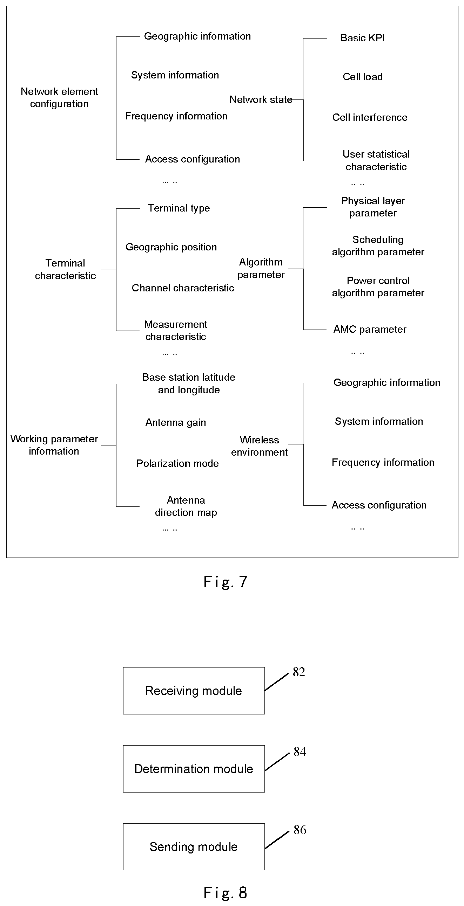

Fig. 8 is a structural block diagram of an optional data sending apparatus according to embodiments of the present disclosure. As shown in Fig. 8, the apparatus includes a receiving module, a determination module, and a sending module.

The receiving module 82 is configured to receive a data initial request sent by a digital twin network according to a current service requirement. The data initial request includes at least one of the following: a data type of data required by the digital twin network, a reporting mode of the required data, or a compression mode of the required data.

It is to be noted that, the data type of the required data may be classified into six categories of network element configuration, network states, terminal characteristics, algorithm parameters, working parameter information, and wireless environment. Specific information included in each category is shown in Fig. 7.

Fig. 7 is a schematic classification diagram of an optional data type according to embodiments of the present disclosure. The data type specifically includes six categories of network element configuration, network states, terminal characteristics, algorithm parameters, working parameter information, and wireless environment. The six categories may be subdivided into:
Network element configuration: geographic information, system information, frequency information, access configuration, etc.
Network state: basic KPIs, cell load, cell interference, user statistical characteristics, etc.
Terminal characteristic: terminal type, geographic position, channel characteristics, measurement characteristics, etc.
Algorithm parameter: physical layer parameters, scheduling algorithm parameters, power control algorithm parameters, Adapt Modulation and Coding (AMC) parameters, etc.
Working parameter information: base station latitude and longitude, antenna gains, polarization modes, antenna patterns, etc.
Wireless environment: geographic information, system information, frequency information, access configuration, etc.

It is to be noted that, the subdivided types of the six data types are examples only; the six data types may further include other subdivided data types; and the present disclosure is not limited thereto.

It is to be noted that, the reporting mode of the required data may be classified into periodic reporting or condition triggered reporting. When the reporting mode is the periodic reporting, a reporting period is carried; and when the reporting mode is the condition triggered reporting, a trigger condition is carried, the trigger condition may be "the amount of data collected being greater than a threshold value", "a value of the collected data being greater than or less than a threshold value", etc., the above trigger conditions are examples only, and the present disclosure is not limited thereto.

It is to be noted that, the compression mode of the required data is used to indicate that request data is compressed or uncompressed by using existing data compression protocols.

The determination module 84 is configured to determine whether a physical network supports content indicated by the data initial request.

The sending module 86 is configured to, when the physical network supports the content indicated by the data initial request, send a request success message to the digital twin network, and send the required data to the digital twin network according to the content indicated by the data initial request.

Through the above apparatus, the data initial request sent by the digital twin network according to the current service requirement is received, where the data initial request includes at least one of the following: the data type of the data required by the digital twin network, the reporting mode of the required data, or the compression mode of the required data; whether the physical network supports the content indicated by the data initial request is determined; and when the physical network supports the content indicated by the data initial request, the request success message is sent to the digital twin network, and the required data is sent to the digital twin network according to the content indicated by the data initial request. By using the above solution, the problem of the lack of data interaction modes between a physical entity network and a digital twin network in the related art is solved, and a technical effect of providing a data interaction mode between the physical entity network and the digital twin network is achieved.

Optionally, the receiving module 82 is further configured to receive a configuration request sent by the digital twin network, where the configuration request includes at least one of the following: a data type of data to be collected, or a collection mode of the data to be collected; collect the data to be collected based on the configuration request; and send a response success message to the digital twin network when the data to be collected is successfully collected, so as to receive the data initial request sent by the digital twin network.

After the digital twin network is started, a configuration request message is sent to the physical network, and the configuration request message includes data types of all data required to be collected, data collection modes, etc., so as to perform initial configuration on the physical network. After receiving the configuration request sent by the digital twin network, the physical network performs data collection on the data to be collected based on the configuration request, and when the data to be collected is successfully collected, the physical network sends the response success message to the digital twin network to receive the data initial request sent by the digital twin network.

Based on the above steps, the sending module 86 is further configured to, after collecting the data to be collected according to the configuration request, send a response failure message to the digital twin network when the data to be collected fails to be collected, where the response failure message carries a reason why the data to be collected fails to be collected.

If the physical network fails to collect the data to be collected, the physical network sends the response failure message to the digital twin network, and the response failure message carries the reason why the data to be collected fails to be collected, so as to inform the digital twin network of failed data collection and the reason for failed data collection.

Optionally, the sending module 86 is further configured to, after determining whether the physical network supports the content indicated by the data initial request, when the physical network does not support the content indicated by the data initial request, send a request failure message to the digital twin network.

It may be understood that, after receiving the data initial request sent by the digital twin network, the physical network checks whether the data type requested as indicated by the data initial request supports reporting, for example, whether to support processing modes such as compression; and if the data requested as indicated by the data initial request is not ready, the request failure message carrying the request failure reason is sent to the digital twin network, so as to inform the digital twin network of request failure and the reason for request failure.

Optionally, the receiving module 82 is further configured to receive a data change request message sent by the digital twin network when the digital twin network receives the request failure message or the digital twin network changes the content indicated by the data initial request, where the data change request message carries data content to be changed, and the data content to be changed includes at least one of the following: the data type of the required data or the reporting mode of the required data.

If the digital twin network receives the request failure message or the digital twin network changes the data type indicated by the data initial request, the digital twin network sends the data change request message carrying the data content to be changed to the physical network, so as to modify information such as the data type of the required data in carried control information, the reporting mode of the required data, etc.

Based on the above steps, the determination module 84 is further configured to, after receiving the data change request message sent by the digital twin network, determine whether the physical network supports the data content to be changed; when the physical network supports the data content to be changed, send a data change success response to the digital twin network, and send the required data to the digital twin network based on the data content to be changed; and when the physical network does not support the data content to be changed, send a data change failure response to the digital twin network.

After the physical network receives the data change request message sent by the digital twin network, whether the physical network supports data such as the data type of the required data requested to be changed, the reporting mode of the required data, etc. is checked; if so, the data change success response is sent to the digital twin network, and the required data is sent to the digital twin network based on the data such as the data content to be changed, including the data type, reporting mode, compression mode, or the like; and if no, the data change failure response is sent to the digital twin network, so as to inform the digital twin network of change failure.

Optionally, the receiving module 82 is further configured to, after receiving the configuration request sent by the physical network, receive a re-configuration request message sent by the digital twin network when the digital twin network is about to change content included in the configuration request; send a re-configuration request success response to the digital twin network when the physical network supports the content included in the changed configuration request; and send a re-configuration request failure response to the digital twin network when the physical network does not support the content included in the changed configuration request.

If the digital twin network is about to change configuration information such as the data type to be collected, a collection mode, etc., the re-configuration request message needs to be sent to the physical network, such that when the digital twin network is about to change content included in the configuration request, the physical network receives the re-configuration request message sent by the digital twin network; the re-configuration request success response is sent to the digital twin network if the physical network supports the content included in the changed configuration request; and the re-configuration request failure response is sent to the digital twin network if the physical network does not support the content included in the changed configuration request.

Optionally, the receiving module 82 is further configured to receive a data termination request message sent by the digital twin network, where the data termination request message carries the data type; and in response to the data termination request message, stop sending data of the data type to the digital twin network.

If the digital twin network does not require a certain type of data to be reported, the data termination request message carrying the data type is sent to the physical network, so as to instruct the physical network to stop reporting the type of data; and after receiving the data termination request message carrying the data type sent by the digital twin network, the physical network stops, in response to the data termination request message, sending data of the data type to the digital twin network.

Optionally, the receiving module 82 is further configured to receive a configuration termination request message sent by the digital twin network; and in response to the configuration termination request message, instruct the physical network to stop at least one of the following flows: data collection, data integration, or data sending.

If the digital twin network is about to terminate a twin service and does not require the physical network to continuously collect data, the configuration termination request message is sent to the physical network, so as to instruct the physical network to stop data collection, integration, and reporting operations; and after the physical network receives the configuration termination request message sent by the digital twin network, in response to the configuration termination request message, the physical network is instructed to stop at least one of the following flows: data collection, data integration, or data sending.

Optionally, the sending module 86 is further configured to collect the data to be collected based on the data initial request; and send a response success message to the digital twin network when the data to be collected is successfully collected, so as to receive the data initial request sent by the digital twin network.

A system may not need an initial configuration process and a re-configuration process, that is, the digital twin network directly sends the data initial request additionally carrying the data type of the data to be collected and the collection mode of the data to be collected without sending the configuration request, collects the data to be collected based on the data initial request, and sends the response success message to the digital twin network when the data to be collected is successfully collected, so as to receive the data initial request sent by the digital twin network. It may be understood that, when the configuration request sent by the digital twin network is not received, the data to be collected may be collected based on the data initial request including at least one of the following: the data type of the data required by the digital twin network, the reporting mode of the required data, the compression mode of the required data, the data type of the data to be collected, or the collection mode of the data to be collected; and when the data to be collected is successfully collected, the response success message is sent to the digital twin network to receive the data initial request sent by the digital twin network.

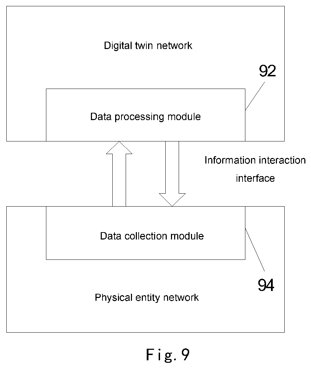

An embodiment of the present disclosure further provides a data sending system. As shown in Fig. 9, Fig. 9 is a structural block diagram of an optional data sending system according to embodiments of the present disclosure. The data sending system specifically includes a data processing module and a data collection module.

The data processing module 92 is located in a digital twin network, and configured to send a data initial request according to a current service requirement to a data collection module located in a physical network. The data initial request includes at least one of the following: a data type of data required by the digital twin network, a reporting mode of the required data, or a compression mode of the required data.

The data collection module 94 is further configured to determine whether the physical network supports content indicated by the data initial request; and when the physical network supports the content indicated by the data initial request, send a request success message to the digital twin network, and send the required data to the digital twin network according to the content indicated by the data initial request.

Through the above system, the data processing module in the digital twin network sends the data initial request sent according to the current service requirement to the data collection module in the physical network, where the data initial request includes at least one of the following: the data type of the data required by the digital twin network, the reporting mode of the required data, or the compression mode of the required data; the data collection module determines whether the physical network supports the content indicated by the data initial request, when the physical network supports the content indicated by the data initial request, sends the request success message to the digital twin network, and sends the required data to the digital twin network according to the content indicated by the data initial request. By using the above solution, the problem of the lack of data interaction modes between a physical entity network and a digital twin network in the related art is solved, and a technical effect of providing a data interaction mode between the physical entity network and the digital twin network is achieved.

An embodiment of the present disclosure further provides a computer-readable storage medium. The computer-readable storage medium stores a computer program. Steps in any one of the above method embodiments are executed when the computer program is configured to operate.

Optionally, in this embodiment, the storage medium may be configured to store a computer program for performing the following steps:
At S1, a data initial request sent by a digital twin network is received according to a current service requirement, where the data initial request includes at least one of the following: a data type of data required by the digital twin network, a reporting mode of the required data, or a compression mode of the required data.
At S2, whether a physical network supports content indicated by the data initial request is determined.
At S3, when the physical network supports the content indicated by the data initial request, a request success message is sent to the digital twin network, and the required data is sent to the digital twin network according to the content indicated by the data initial request.

In an exemplary embodiment, the computer-readable storage medium may include, but is not limited to, a USB flash disk, a Read-Only Memory (ROM), a Random Access Memory (RAM), and various media that can store computer programs, such as a mobile hard disk, a magnetic disk, or an optical disk.

For specific examples in this embodiment, refer to the examples described in the foregoing embodiments and the exemplary implementations, and this embodiment will not be repeated thereto.

An embodiment of the present disclosure further provides an electronic apparatus. The electronic apparatus includes a memory and a processor. The memory is configured to store a computer program. The processor is configured to operate the computer program to execute steps in any one of method embodiments described above.

Optionally, in this embodiment, the processor may be configured to perform the following steps through the computer program.

At S1, a data initial request sent by a digital twin network is received according to a current service requirement, where the data initial request includes at least one of the following: a data type of data required by the digital twin network, a reporting mode of the required data, or a compression mode of the required data.

At S2, whether a physical network supports content indicated by the data initial request is determined.

At S3, when the physical network supports the content indicated by the data initial request, a request success message is sent to the digital twin network, and the required data is sent to the digital twin network according to the content indicated by the data initial request.

In an exemplary embodiment, the electronic apparatus may further include a transmission device and an input/output device. The transmission device is connected to the processor. The input/output device is connected to the processor.

For specific examples in this embodiment, refer to the examples described in the foregoing embodiments and the exemplary implementations, and this embodiment will not be repeated thereto.

It is apparent that those skilled in the art should understand that the above mentioned modules or steps of the present disclosure may be implemented by a general computing device, and may also be gathered together on a single computing device or distributed in network composed of multiple computing devices. The above mentioned modules or steps of the present disclosure may be implemented with program codes executable by the computing device, so that may be stored in a storage device for execution by the computing device, and in some cases, the steps shown or described may be performed in a different sequence than herein, or can be fabricated into individual integrated circuit modules respectively, or multiple modules or steps thereof are fabricated into a single integrated circuit module for implementation. In this way, the present disclosure is not limited to any specific combination of hardware and software.

The above are only the preferred embodiments of the present disclosure and are not intended to limit the present disclosure. For those skilled in the art, the present disclosure may have various modifications and variations. Any modifications, equivalent replacements, improvements and the like made within the principle of the present disclosure all fall within the scope of protection of the present disclosure.

## Claims

1. A data sending method, comprising:
receiving a data initial request sent by a digital twin network according to a current service requirement, wherein the data initial request comprises at least one of the following: a data type of data required by the digital twin network, a reporting mode of the required data, or a compression mode of the required data;
determining whether a physical network supports content indicated by the data initial request; and
when the physical network supports the content indicated by the data initial request, sending a request success message to the digital twin network, and sending the required data to the digital twin network according to the content indicated by the data initial request.

2. The data sending method according to claim 1, wherein receiving the data initial request sent by the digital twin network according to the current service requirement comprises:
receiving a configuration request sent by the digital twin network, wherein the configuration request comprises at least one of the following: a data type of data to be collected, or a collection mode of the data to be collected;
collecting the data to be collected based on the configuration request; and
sending a response success message to the digital twin network when the data to be collected is successfully collected, so as to receive the data initial request sent by the digital twin network.

3. The data sending method according to claim 2, wherein after collecting the data to be collected based on the configuration request, the method further comprises:
sending a response failure message to the digital twin network when the data to be collected fails to be collected, wherein the response failure message carries a reason why the data to be collected fails to be collected.

4. The data sending method according to claim 1, wherein after determining whether the physical network supports the content indicated by the data initial request, the method further comprises:
when the physical network does not support the content indicated by the data initial request, sending a request failure message to the digital twin network.

5. The data sending method according to claim 4, further comprising:
receiving a data change request message sent by the digital twin network when the digital twin network receives the request failure message or the digital twin network changes the content indicated by the data initial request, wherein the data change request message carries data content to be changed, and the data content to be changed comprises at least one of the following: the data type of the required data or the reporting mode of the required data.

6. The data sending method according to claim 5, wherein after receiving the data change request message sent by the digital twin network, the method further comprises:
determining whether the physical network supports the data content to be changed;
when the physical network supports the data content to be changed, sending a data change success response to the digital twin network, and sending the required data to the digital twin network based on the data content to be changed; and
when the physical network does not support the data content to be changed, sending a data change failure response to the digital twin network.

7. The data sending method according to claim 2, wherein after receiving the configuration request sent by the physical network, the method further comprises:
receiving a re-configuration request message sent by the digital twin network when the digital twin network is about to change content comprised in the configuration request;
sending a re-configuration request success response to the digital twin network when the physical network supports the content comprised in the changed configuration request; and
sending a re-configuration request failure response to the digital twin network when the physical network does not support the content comprised in the changed configuration request.

8. The data sending method according to claim 1, further comprising:
receiving a data termination request message sent by the digital twin network, wherein the data termination request message carries the data type; and
in response to the data termination request message, stopping sending data of the data type to the digital twin network.

9. The data sending method according to claim 1, further comprising:
receiving a configuration termination request message sent by the digital twin network; and
in response to the configuration termination request message, instructing the physical network to stop at least one of the following flows: data collection, data integration, or data sending.

10. The data sending method according to claim 1, wherein the data initial request further comprises: a data type of data to be collected or a collection mode of the data to be collected; and the method further comprises:
collecting the data to be collected based on the data initial request; and
sending a response success message to the digital twin network when the data to be collected is successfully collected, so as to receive the data initial request sent by the digital twin network.

11. A data sending apparatus, comprising:
a receiving module, configured to receive a data initial request sent by a digital twin network according to a current service requirement, wherein the data initial request comprises at least one of the following: a data type of data required by the digital twin network, a reporting mode of the required data, or a compression mode of the required data;
a determination module, configured to determine whether a physical network supports content indicated by the data initial request; and
a sending module, configured to, when the physical network supports the content indicated by the data initial request, send a request success message to the digital twin network, and send the required data to the digital twin network according to the content indicated by the data initial request.

12. A data sending system, comprising:
a data processing module, located in a digital twin network, and configured to send a data initial request according to a current service requirement to a data collection module located in a physical network, wherein the data initial request comprises at least one of the following: a data type of data required by the digital twin network, a reporting mode of the required data, or a compression mode of the required data; and
the data collection module is further configured to determine whether the physical network supports content indicated by the data initial request; and when the physical network supports the content indicated by the data initial request, send a request success message to the digital twin network, and send the required data to the digital twin network according to the content indicated by the data initial request.

13. A computer-readable storage medium, having a computer program stored therein, wherein the computer program is configured to perform, when being executed, the method as claimed in any one of claims 1 to 10.

14. An electronic apparatus, comprising a memory and a processor, wherein the memory stores a computer program; and the processor is configured to executed the computer program to perform the method as claimed in any one of claims 1 to 10.
